# EUROPEAN PATENT SPECIFICATION

(11) **EP 3 661 632 B1**
(45) Date of publication and mention of the grant of the patent: **17.11.2021**
(21) Application number: 18759747.1
(22) Date of filing: 31.07.2018
(51) Int. Cl.: B01D 63/08, B01D 65/10, G01N 1/10

(54) **PERMEATION TEST CELL**
PERMEATIONSTESTZELLE
CELLULE DE TEST DE PERMÉANCE

(30) Priority: 03.08.2017 IT 201700089514
(43) Date of publication of application: 10.06.2020
(60) Divisional application: 21184465.9
(73) Proprietor: Universita' Degli Studi Di Sassari, 07100 Sassari (IT)
(72) Inventor: COSSU, Massimo, 07100 Sassari (IT); RASSU, Giovanna, 07100 Sassari (IT); GAVINI, Elisabetta, 07100 Sassari (IT); GIUNCHEDI, Paolo, 07100 Sassari (IT)
(74) Representative: Celona, Antonio
(86) International application number: PCT/IB2018/055726
(87) International publication number: WO 2019/025969

(56) References cited:
- EP-A1- 1 127 607
- EP-A2- 2 078 556
- WO-A1-2014/067621
- WO-A2-90/06846
- DE-C1- 3 520 489
- US-A- 3 556 302
- US-A- 4 846 970
- US-A1- 2013 138 384
- US-B1- 7 546 925

## Description

### Field of the invention

The present invention relates to the field of devices for studying the permeation and/or diffusion of substances, in particular pharmaceuticals, through selective membranes, in particular synthetic or biological membranes such as for example, mucosas and tissues. The invention in particular relates to permeation cells, or diffusion cells, of the horizontal and vertical type.

More specifically, the invention relates to diffusion cells (or permeation cells) for *in-vitro* and *ex-vivo* pharmaceutical permeability studies.

### Background art

As is known, to study the capacity of substances to cross synthetic or biological membranes, the use is made of suitable devices comprising two compartments or chambers separated from each other by a membrane. Such devices generally are called permeation cells or diffusion cells.

They may be divided into two large categories: horizontal-diffusion cells and vertical-diffusion cells. Both may then be divided in turn into two main groups: static-diffusion cells and dynamic-diffusion cells, also called "flow-through cells".

The dynamic-diffusion cell differs from the corresponding static one for the fact that the donor liquid (only in the horizontal-diffusion chamber) and the acceptor liquid in each of the two chambers are continuously recycled or restored.

The nature of the donor may be varied with vertical-diffusion cells; the permeability of a molecule in a solution, in a powder, in a suspension, in a semisolid preparation (i.e. creams, gels) may indeed be studied.

The static cell most used in *in-vitro* permeation studies is the Franz diffusion cell *(Franz, 1978).* This vertical-diffusion cell allows *in-vitro* tests to be carried out to assess the release of pharmaceuticals from creams, gels and ointments.

Among the several dynamic-permeation cells, the in line *Bronaugh cells* (vertical-diffusion) and the *Ussing chambers* (horizontal-diffusion) are worth noting. These types of cells are broadly used both in the in-vitro studies of the passage of liquid or solution pharmaceuticals through synthetic membranes and biological tissues and for iontophoresis studies.

Both the horizontal and the vertical cells comprise two chambers, one containing the permeant and the other the recipient solution. These two compartments are separated by an artificial or biological membrane.

The liquid contained in the chambers typically is temperature stabilized (generally from 32 up to 37°C).

Disadvantageously, known permeation cells do not allow the permeation surface to be varied in an easy manner. Indeed, each permeation cell is designed to have only one permeation surface.

Further disadvantages of known permeation cells in particular are:
- low reproducibility of the data obtained;
- continuous formation of air bubbles below the membrane, especially in step of sampling and restoring the acceptor fluid, with subsequent decrease of the permeation surface and test invalidation;
- poor adaptability to transmucosal permeation studies;
- difficulty in loading the sample, in particular when it is in the form of powder or is semi-solid;
- poor visibility of the membrane during the application of the formulation;
- dispersion of the heat in the upper part of the cell, where the permeation occurs;
- cleaning difficulty at the end of the test.

Moreover, in the particular case of static cells, a saturation of the acceptor liquid may disadvantageously occur, with subsequent limitation of the type and quantities of testable pharmaceuticals, especially those not highly soluble in the acceptor means. Documents US 2013/138384 and WO90/06846 disclose permeable cells according to the preamble of claim 1.

### Summary of the invention

It is an object of the present invention to provide a permeation cell, or diffusion cell, which allows the permeation surface to be easily varied, according to claim 1.

At least such an object, and others which shall be apparent in light of the present description, is achieved by means of a permeation cell, in particular of the horizontal- or vertical-diffusion type, provided with a membrane and with at least one support disc for the membrane;
wherein the support disc is provided with a central hole having a dimension ranging between 1 and 10 cm²;
and wherein the support disc is adapted to be replaced with another support disc provided with a central hole having a different dimension with respect to the central hole of the support disc so as to vary the permeation surface.

Preferably, the central hole of the support disc has a dimension ranging between 1 and 3 cm².

In particular, it is preferable that the central hole is circular or substantially circular.

Optionally, the central hole has an inner diameter ranging between 11 and 36 mm; preferably between 11 and 20 mm.

The central hole, which is a through hole, substantially is an opening or a window. In particular, the central hole is an opening of the two opposed faces of the support disc.

Optionally, the support disc is provided with a single central hole.

Optionally, the central hole is divided into portions, or quadrants, for example by means of a cross-shaped element.

Optionally, the overall width of the permeation cell ranges between 30 and 55 mm.

Optionally, the overall length of the permeation cell ranges between 30 and 55 mm.

Optionally, the overall thickness of the permeation cell ranges between 10 and 40 mm.

Optionally, the membrane is a biological membrane, e.g. skin, intestinal mucosa, nasal mucosa, buccal mucosa, etc. In particular, the biological membrane comprises or is constituted by skin, intestinal mucosa, nasal mucosa, buccal mucosa, etc.

Preferably, the membrane and the support disc are coaxial to each other. The permeation cell comprises a first body and a second body provided with a respective cavity, i.e. the bodies are hollow, and the first body and the second body are fastened to each other by means of fastening means.

Said at least one support disc and said membrane are arranged between the first body and the second body;
whereby a substance may pass from the cavity of the first body, or of the second body, to the cavity of the second body, or of the first body, through the central hole of the support disc and through the membrane.

The aforesaid dimension of the central hole defines the permeation surface, in particular the permeation surface available for the passage of a substance through the membrane from one cavity to the other.

Optionally, the central hole is the only passage available for the substances to pass through the membrane from one cavity to the other.

Typically, the first body defines or forms the acceptor compartment of the cell, and the second body defines or forms the donor compartment of the cell.

In particular, the acceptor compartment and the donor compartment are defined or delimited by the respective body and by the membrane support-disc and by the membrane.

Optionally, the support disc comprises a flange from which a skirt extends in distal direction from the membrane, the skirt preferably having a cylindrical side wall. The skirt is inserted in one of the two bodies.

Said fastening means comprise or are constituted by magnetic fastening means.

Optionally, said magnetic fastening means are magnetic cylinders.

Optionally, said magnetic fastening means comprise first magnetic fastening means arranged at the vertexes of a first component of the permeation cell and second magnetic fastening means arranged at the vertexes of a second component of the permeation cell;
said first magnetic fastening means being adapted to interact with the second magnetic fastening means.

Optionally, said first component is the first body and said second component is the second body.

Optionally, said first magnetic fastening means and said second magnetic fastening means are analogous to each other.

Optionally, said first magnetic fastening means and said second magnetic fastening means are magnetic cylinders.

Optionally, the membrane rests on - preferably directly rests on - the support disc. In particular, it is preferable that the membrane rests on one of the two faces of the support disc.

Optionally, the permeation cell comprises a seal arranged around the support disc.

The seal prevents undesired leaks of liquid or of the sample in general from the cell.

Optionally, said seal is arranged in a groove of the first body or of the second body.

Optionally, the permeation cell comprises two support discs between which the membrane is interposed.

Preferably, said two support discs are identical to each other.

Optionally, the first body and the second body are equal to each other or are different from each other.

Optionally, the permeation cell comprises two seals arranged around a respective support disc.

Optionally, a first seal is accommodated in a groove of the first body and a second seal is accommodated in a groove of the second body.

Optionally, the permeation cell is a vertical-diffusion cell and comprises only one support disc, and the second body, which is destined to be the upper body, is different with respect to the first body, which is destined to be the lower body.

Optionally, the cavity of the second body, in particular in a vertical cell, has an inner funnel shape and is closed at the outer side by a removable cap or lid provided with a hole, in particular an aeration hole for keeping the pressure constant.

Optionally, in particular in a horizontal cell, the first body and/or the second body have two opposed holes, of which a first hole serves for the inlet of the fluid and a second hole serves for the outlet of the fluid; said fluid being preferably an aqueous liquid; at least one of the holes being adapted to be connected to a pump which feeds the permeation cell.

Optionally, the first body or the second body is provided with a housing for accommodating a magnetic mixing element, preferably a magnetic bar.

Optionally, said housing is obtained in a wall that delimits the cavity of the first body or of the second body; said housing preferably being a recess of said wall.

Optionally, the first body and the second body are each provided with a housing for accommodating a respective magnetic mixing element, preferably a magnetic bar.

Optionally, a first housing is obtained in a wall that delimits the cavity of the first body; and a second housing is obtained in a wall that delimits the cavity of the second body; said first housing and said second housing preferably being a recess of the respective wall.

Optionally, housings adapted to house a magnetic bar are made in the inner vertical surface and/or in the base of the cavity of the first body and of the second body.

Optionally, the permeation cell in general comprises one or more magnetic bars. For example, a magnetic bar may be arranged in the acceptor compartment and/or a magnetic bar may be arranged in the donor compartment.

Optionally, the first body and the second body substantially are parallelepiped-shaped.

Optionally, the first body and the second body are side-by-side each other on the side of the two respective cavities, the cavities being separated from one another by said at least one support disc.

The disclosure also describes kit, which is not part of the invention, comprising a permeation cell according to any one of claims 1 to 15, and at least one further support disc for the membrane configured to replace the support disc adapted to be replaced with another support disc provided with a central hole having a different dimension with respect to the central hole of the support disc so as to vary the permeation surface.

Optionally, the only difference between the support disc and said further support disc is the dimension of the respective central hole.

Advantageously, a permeation cell according to the invention is hydrodynamically suitable for the diffusion process.

Advantageously, the support disc of the membrane, or membrane-support disc, is provided with the hole in the middle and is interchangeable with other equal discs which differ only in the inner diameter of the hole, which determines the diffusion area.

Advantageously, it is sufficient to replace the support disc alone of the membrane in order to vary the permeation surface of the cell.

According to one aspect, the cell according to the invention also allows the formation of air bubbles below the permeation surface to be avoided, and is also suitable for the study of transmucosal permeation.

Those skilled in the art are aware of the fact that typically a vertical-diffusion permeation cell is used so that the membrane (in particular, its two largest sides) substantially is parallel to the resting plane of the cell.

Moreover, those skilled in the art are aware of the fact that typically a horizontal-diffusion permeation cell is used so that the membrane substantially is orthogonal to the resting plane of the cell.

Further features and advantages of the invention will become more apparent in light of the detailed description of non-exclusive embodiments thereof.

The dependent claims describe particular embodiments of the invention.

### Brief description of the drawings

The following description refers to the accompanying drawings, which are provided by way of a non-limiting example, in which:
Figure 1a shows a first exploded view of a permeation cell, in particular a horizontal-diffusion permeation cell, according to one example of the invention;
Figure 1b shows another exploded view of the cell in Fig. 1a, in which the permeation cell is rotated with respect to Fig. 1a;
Figure 2 shows an exploded view of a permeation cell, in particular a vertical-diffusion permeation cell, according to another example of the invention;
Figure 3 shows a graph showing the results of an experimental test;
Figure 4 shows a graph showing the results of another experimental test.

The same reference numerals indicate the same elements or components.

### Detailed description of embodiments of the invention

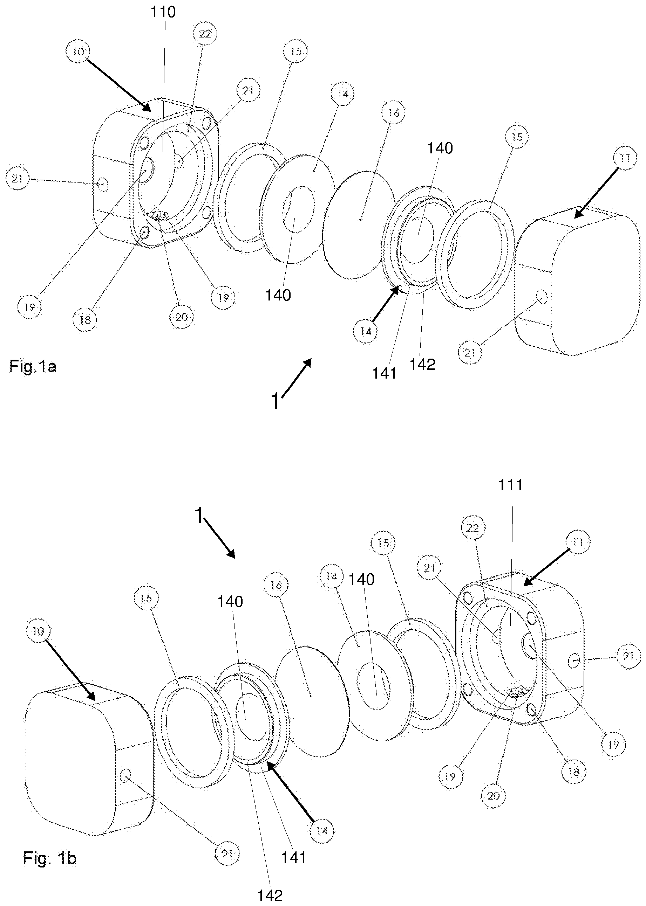

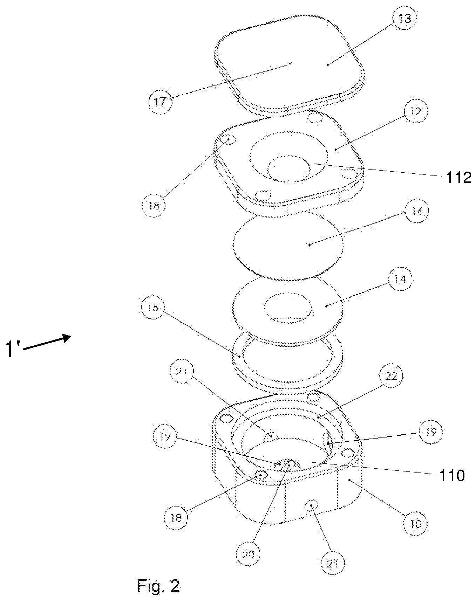

With reference to figures 1a, 1b and 2, a permeation cell 1, 1', either horizontal or vertical, according to the invention comprises, or substantially is constituted by, two hollow bodies, also called first body and second body for descriptive purposes. The hollow bodies are indicated with numerals 10 and 11, respectively, for the permeation cell 1 (Figures 1a, 1b, horizontal-diffusion cell). For the permeation cell 1' (Fig. 2, vertical-diffusion cell), the hollow bodies are indicated with numerals 10 and 12, respectively. Preferably, the hollow bodies 10, 11, 12 essentially are parallelepiped-shaped. The hollow body 10 and the hollow body 11, 12 define or constitute the acceptor compartment and the donor compartment, respectively, of the permeation cell 1, 1'.

Said two hollow bodies 10, 11, 12 are side-by-side each other on the side of the two respective cavities 110, 111, 112, such cavities being separated from each other by at least one membrane-support disc 14, (also called support disc) perforated in the middle (i.e. with a hole 140 in the middle) on which membrane 16 is resting. The sizes of the hole determine the permeation surface. Advantageously, the permeation surface may be easily changed by changing the membrane-support disc 14.

Optionally, the support disc 14 comprises a flange 141 from which a skirt 142 extends, which preferably has a cylindrical side wall, the skirt extending in distal direction from membrane 16. Skirt 142 is inserted in one of the two bodies 10, 11.

Preferably, there are provided suitable seals 15 arranged around the circumference of the membrane-support disc 14 and preferably accommodated in a respective groove 22 made in the hollow body/bodies 10, 11. The seals 15 prevent undesired leaks of liquid or of sample in general.

Preferably, seal 15 is arranged around the aforesaid skirt 142 and rests on flange 141 of the membrane support-disc 14.

As depicted in Figure 1a, 1b, the horizontal-diffusion cell 1 preferably is exactly symmetrical with respect to the membrane 16 and therefore comprises two identical or substantially identical hollow bodies 10, 11 and two membrane support-discs 14 between which the membrane 16 is inserted.

As depicted in Figure 2, the vertical-diffusion cell 1' instead preferably has one membrane-support disc 14 only. Preferably, cavity 112 (which substantially is the donor compartment) of the hollow body 12 (i.e. the upper hollow body) may be different with respect to cavity 110 (which substantially is the acceptor compartment) of body 10 (i.e. the lower hollow body). For example, cavity 112 may have a cylindrical or funnel inner shape (as shown in Figure 2) so as to facilitate the placement of the sample in any state it is in (solid, liquid or semi-solid). The aforesaid funnel shape preferably has decreasing diameter towards the membrane 16. The funnel shape is for example, defined by a truncated-conical wall.

Moreover, the cavity 112 of body 12 preferably is closed at the outer side by a removable cap or lid 13. Lid 13 preferably is provided with an aeration hole 17, in particular to keep the pressure constant.

The cavity 110 of body 10 preferably is delimited by a substantially cylindrical wall both for cell 1 and for cell 1'.

Optionally, in all embodiments, the acceptor compartment, defined by cavity 110, by the support disc 14 and by the membrane 16, preferably has a volume ranging between 3 and 20 ml.

Optionally, in all embodiments, the donor compartment, defined by cavity 111, by the support disc 14 and by membrane 16, preferably has a volume ranging between 3 and 50 ml.

Optionally, in all embodiments, the donor compartment, defined by cavity 112, by the support disc 14 and by membrane 16, preferably has a volume ranging between 0.2 and 3 ml.

In the permeation cell 1, which in particular is a horizontal-diffusion permeation cell, the body 10, in particular the acceptor compartment, and preferably also the body 11, in particular the donor compartment, has opposed holes 21 for the inlet and the outlet of the liquid, and preferably for the connection to the pump that feeds the cell.

In the permeation cell 1', which in particular is a vertical-diffusion permeation cell, body 10, i.e. the lower body, in particular the acceptor compartment, has opposed holes 21 for the inlet and the outlet of the liquid, and preferably for the connection to the pump that feeds the cell.

The aforesaid holes 21 of body 10 and of body 11 preferably are made in a side wall of the respective body, said wall being transverse with respect to the bottom wall of the respective cavity 110, 111.

Optionally, the wall which delimits the aforesaid holes 21 is threaded.

Optionally, housings 19 adapted to house a magnetic bar 20 or other magnetic element for mixing the solution (i.e. of the sample) are made on the inner vertical surface and/or in the base of the chambers 10 and 11.

The above-described hollow bodies may be connected to each other by fastening means (screws, screw/nut, etc.), preferably by means of magnetic means, for example magnetic cylinders 18 preferably arranged at the vertexes of a component (possibly embedded or incorporated in the material forming it) and capable of interacting with analogous means or magnetic cylinders arranged on the vertexes of another component or compartment.

Such components provided with magnetic means preferably are the hollow bodies themselves.

Preferably, when the lid 13 is provided, the latter is fastened to the body 12 by means of magnetic means, e.g. magnetic cylinders. Such magnetic means preferably are arranged at the vertexes of lid 13 and at the vertexes of body 12.

Preferably, the cells 1, 1' according to the invention are made by means of casting molds preferably using bi-component epoxy resins. This technique ensures an increased accuracy in the details and repeatability in the production in series, thus allowing the interchangeability of all the components thereof.

The use of the resin gives a cell an increased chemical stability. Indeed, this material is compatible with most of the solvents used in permeations tests, such as for example: aqueous ethanol or methanol mixes and aqueous mixes of salts, acids or bases in a pH range between 2.5 and 12. Moreover, this specific resin has an increased thermal stability which ensures the non-deformability thereof up to temperatures close to 70 °C.

The couplings, or magnetic means, embedded in the resin, improve the functionality, practicality and assembly speed, the cleaning and also the ergonomic aspect and appearance thereof.

The insertion in the acceptor compartment of specific connectors for tubes in the holes 21, preferably threaded holes, of the bodies allows the inlet and outlet circulation of the acceptor fluid with a perfect hydraulic or hydrodynamic seal.

The interchangeable support for the membrane allows the permeation surface to be varied according to experimental needs in a range between 1.0 and 10.0 cm², preferably between 1 and 3 cm², which corresponds to the dimension of the central hole 140, i.e. to the section area thereof.

The interchangeable donor compartment 12 in the vertical-diffusion cell allows both the capacity and the permeation surface to be modified according to experimental needs.

In other words, the body 12 may be replaced by a body provided with a cavity having different volume or capacity.

The cell may also be used to study gas permeation through various materials.

The cell may operate both in dynamic manner connected to a pump and in static manner connected to a tank, which allows the simultaneous drawing and restoring of the acceptor fluid to be carried out, thus avoiding the unpleasant formation of air bubbles below the membrane.

It is worth noting that the present invention advantageously provides a permeation cell which allows the permeation surface, and optionally also the volume of the acceptor means, to be quickly and simply varied without needing to completely replace the cell itself.

A further advantageous aspect of the invention lies in the increased reproducibility of experimental data which may be obtained with the permeation cells.

Such an advantage is also achieved when operating with a plurality of cells that are constructively identical to one another, experimental conditions being equal.

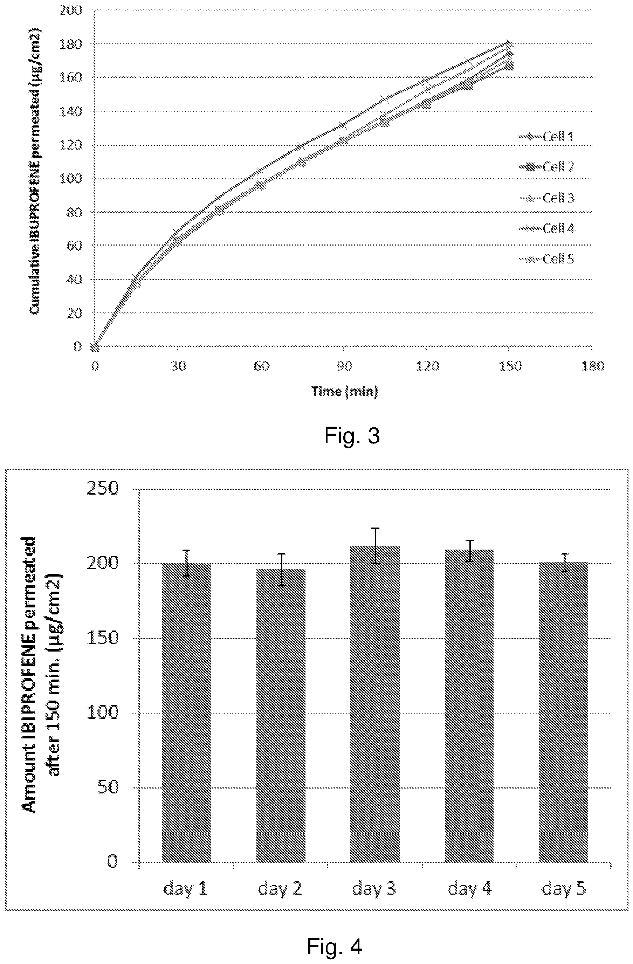

This advantageous aspect may be better appreciated with reference to Figures 3 and 4.

Figures 3 and 4 are representative of experimental results of permeation tests, i.e. tests for assessing the capacity of a compound to diffuse from a donor compartment to an acceptor compartment.

In particular, such tests were conducted using a synthetic PVDF (polyvinylidene difluoride) membrane pre-treated with a 1% solution (w/v) of lecithin in dodecane.

The permeability of 100 µL of 1% (w/v) ibuprofen in PBS pH 7.4 in five constructively identical cells was simultaneously measured in order to assess the variability (accuracy) between a plurality of cells. The measurement was carried out by means of spectrophotometry at 220 nm.

The results shown in Fig. 3 are expressed as cumulative quantity of permeated pharmaceutical (µg/cm²) as a function of time.

The permeability of a 1% (w/v) ibuprofen solution in PBS pH 7.4 in five constructively identical cells on five different days was assessed in order to determine the day-to-day assay reproducibility.

The results (average and standard deviation) are shown in Figure 4 and show high reproducibility of the tested system.

## Claims

1. A permeation cell (1, 1') provided with a membrane (16) and with at least one support disc (14) for the membrane (16);
wherein the support disc (14) is provided with a central hole (140);
and wherein the support disc (14) is adapted to be replaced with another support disc provided with a central hole having a different dimension with respect to the central hole of the support disc (14) so as to vary the permeation surface;
the permeation cell (1, 1') comprising
a first body (10) and a second body (11, 12), provided with a respective cavity (110, 111, 112), which are fastened to one another by means of fastening means (18);
wherein said at least one support disc (14) and said membrane (16) are arranged between the first body (10) and the second body (11, 12);
whereby a substance may pass from the cavity (111, 112) of the second body (11, 12) to the cavity (110) of the first body (10) through the central hole (140) of the support disc (14) and through the membrane (16); said permeation cell being **characterized in that** said central hole (140) has a dimension ranging between 1 and 10 cm² and **in that** said fastening means (18) comprise or are constituted by magnetic fastening means.

2. A permeation cell (1, 1') according to claim 1, wherein said magnetic fastening means are magnetic cylinders.

3. A permeation cell (1, 1') according to claim 1 or 2, wherein said magnetic fastening means comprise first magnetic fastening means arranged at the vertexes of a first component of the permeation cell (1, 1') and second magnetic fastening means arranged at the vertexes of a second component of the permeation cell (1, 1');
said first magnetic fastening means being adapted to interact with the second magnetic fastening means.

4. A permeation cell (1, 1') according to claim 3, wherein said first component is the first body (10) and said second component is the second body (11, 12).

5. A permeation cell (1, 1') according to claim 3 or 4, wherein said first magnetic fastening means and said second magnetic fastening means are analogous to each other.

6. A permeation cell (1, 1') according to any one of claims 3 to 5, wherein said first magnetic fastening means and said second magnetic fastening means are magnetic cylinders.

7. A permeation cell (1, 1') according to any one of the preceding claims, wherein the membrane (16) rests on the support disc (14).

8. A permeation cell (1, 1') according to any one of the preceding claims, comprising a seal (15) arranged around the support disc (14).

9. A permeation cell (1, 1') according to claim 8, wherein said seal (15) is arranged in a groove (22) of the first body (10) or of the second body (11, 12).

10. A permeation cell (1) according to any one of the preceding claims, comprising two support discs (14) between which the membrane (16) is interposed.

11. A permeation cell (1) according to any one of the preceding claims, wherein the first body (10) and the second body (11) are equal to each other.

12. A permeation cell (1) according to claim 10 or 11, comprising two seals (15), each seal (15) being arranged around a respective support disc (14).

13. A permeation cell (1) according to claim 12, wherein a first seal (15) is accommodated in a groove (22) of the first body (10) and a second seal (15) is accommodated in a groove (22) of the second body (11).

14. A permeation cell (1') according to any one of claims 1 to 9, comprising one support disc (14) only, and wherein the second body (12), which is destined to be the upper body, is different with respect to the first body (10), which is destined to be the lower body (10).

15. A permeation cell (1') according to claim 14, wherein the cavity (112) of the second body (12) has an inner funnel shape and is closed at the outer side by a removable cap or lid (13) provided with a hole (17).

## Patentansprüche

1. Permeationszelle (1, 1'), die mit einer Membran (16) und mit mindestens einer Trägerscheibe (14) für die Membran (16) versehen ist;
wobei die Trägerscheibe (14) mit einem zentralen Loch (140) versehen ist;
und wobei die Trägerscheibe (14) dazu geeignet ist, durch eine andere Trägerscheibe ersetzt zu werden, die mit einem zentralen Loch versehen ist, das eine andere Abmessung in Bezug auf das zentrale Loch der Trägerscheibe (14) aufweist, um die Permeationsfläche zu verändern;
die Permeationszelle (1, 1') umfasst
einen ersten Körper (10) und einen zweiten Körper (11, 12), die jeweils mit einem Hohlraum (110, 111, 112) versehen sind und mittels Befestigungsmitteln (18) aneinander befestigt sind;
wobei die mindestens eine Trägerscheibe (14) und die Membran (16) zwischen dem ersten Körper (10) und dem zweiten Körper (11, 12) angeordnet sind;
wobei eine Substanz von dem Hohlraum (111, 112) des zweiten Körpers (11, 12) zu dem Hohlraum (110) des ersten Körpers (10) durch das zentrale Loch (140) der Trägerscheibe (14) und durch die Membran (16) hindurchtreten kann; wobei die Permeationszelle **dadurch gekennzeichnet ist, dass** das zentrale Loch (140) eine Abmessung im Bereich zwischen 1 und 10 cm² hat und dass die Befestigungsmittel (18) magnetische Befestigungsmittel umfassen oder aus solchen bestehen.

2. Permeationszelle (1, 1') nach Anspruch 1, wobei die magnetischen Befestigungsmittel magnetische Zylinder sind.

3. Permeationszelle (1, 1') nach Anspruch 1 oder 2, wobei die magnetischen Befestigungsmittel erste magnetische Befestigungsmittel, die an den Scheitelpunkten einer ersten Komponente der Permeationszelle (1, 1') angeordnet sind, und zweite magnetische Befestigungsmittel, die an den Scheitelpunkten einer zweiten Komponente der Permeationszelle (1, 1') angeordnet sind, umfassen;
die ersten magnetischen Befestigungsmittel sind dazu geeignet, mit den zweiten magnetischen Befestigungsmitteln zusammenzuwirken.

4. Permeationszelle (1, 1') nach Anspruch 3, wobei die erste Komponente der erste Körper (10) und die zweite Komponente der zweite Körper (11, 12) ist.

5. Permeationszelle (1, 1') nach Anspruch 3 oder 4, wobei die ersten magnetischen Befestigungsmittel und die zweiten magnetischen Befestigungsmittel analog zueinander sind.

6. Permeationszelle (1, 1') nach einem der Ansprüche 3 bis 5, wobei die ersten magnetischen Befestigungsmittel und die zweiten magnetischen Befestigungsmittel magnetische Zylinder sind.

7. Permeationszelle (1, 1') nach einem der vorstehenden Ansprüche, wobei die Membran (16) auf der Trägerscheibe (14) aufliegt.

8. Permeationszelle (1, 1') nach einem der vorstehenden Ansprüche, umfassend eine um die Trägerscheibe (14) angeordnete Dichtung (15).

9. Permeationszelle (1, 1') nach Anspruch 8, wobei die Dichtung (15) in einer Nut (22) des ersten Körpers (10) oder des zweiten Körpers (11, 12) angeordnet ist.

10. Permeationszelle (1) nach einem der vorstehenden Ansprüche, umfassend zwei Trägerscheiben (14), zwischen denen die Membran (16) angeordnet ist.

11. Permeationszelle (1) nach einem der vorstehenden Ansprüche, wobei der erste Körper (10) und der zweite Körper (11) einander gleich sind.

12. Permeationszelle (1) nach Anspruch 10 oder 11, umfassend zwei Dichtungen (15), wobei jede Dichtung (15) um eine entsprechende Trägerscheibe (14) angeordnet ist.

13. Permeationszelle (1) nach Anspruch 12, wobei eine erste Dichtung (15) in einer Nut (22) des ersten Körpers (10) und eine zweite Dichtung (15) in einer Nut (22) des zweiten Körpers (11) untergebracht ist.

14. Permeationszelle (1') nach einem der Ansprüche 1 bis 9, umfassend nur eine Trägerscheibe (14), und wobei der zweite Körper (12), der dazu bestimmt ist, der obere Körper zu sein, sich von dem ersten Körper (10), der dazu bestimmt ist, der untere Körper (10) zu sein, unterscheidet.

15. Permeationszelle (1') nach Anspruch 14, wobei der Hohlraum (112) des zweiten Körpers (12) eine innere Trichterform aufweist und an der Außenseite durch eine abnehmbare Kappe oder einen abnehmbaren Deckel (13) verschlossen ist, der mit einem Loch (17) versehen ist.

## Revendications

1. Cellule de perméation (1, 1') munie d'une membrane (16) et d'au moins un disque de support (14) pour la membrane (16) ;
dans laquelle le disque de support (14) est muni d'un trou central (140) ;
et dans laquelle le disque de support (14) est conçu pour être remplacé par un autre disque de support muni d'un trou central ayant une dimension différente par rapport au trou central du disque de support (14) de façon à faire varier la surface de perméation ;
la cellule de perméation (1, 1') comprenant
un premier corps (10) et un second corps (11, 12), munis d'une cavité respective (110, 111, 112), qui sont fixés l'un à l'autre au moyen de moyens de fixation (18) ;
dans laquelle ledit au moins un disque de support (14) et ladite membrane (16) sont agencés entre le premier corps (10) et le second corps (11, 12) ;
ce par quoi une substance peut passer de la cavité (111, 112) du second corps (11, 12) à la cavité (110) du premier corps (10) à travers le trou central (140) du disque de support (14) et à travers la membrane (16); ladite cellule de perméation étant **caractérisée en ce que** ledit trou central (140) possède une dimension qui varie entre 1 et 10 cm² et **en ce que** lesdits moyens de fixation (18) comprennent ou sont constitués par des moyens de fixation magnétiques.

2. Cellule de perméation (1, 1') selon la revendication 1, dans laquelle lesdits moyens de fixation magnétiques sont des cylindres magnétiques.

3. Cellule de perméation (1, 1') selon la revendication 1 ou 2, dans laquelle lesdits moyens de fixation magnétiques comprennent des premiers moyens de fixation magnétiques agencés aux sommets d'un premier composant de la cellule de perméation (1, 1') et des seconds moyens de fixation magnétiques agencés aux sommets d'un second composant de la cellule de perméation (1, 1') ;
lesdits premiers moyens de fixation magnétiques étant conçus pour interagir avec les seconds moyens de fixation magnétiques.

4. Cellule de perméation (1, 1') selon la revendication 3, dans laquelle ledit premier composant est le premier corps (10) et ledit second composant est le second corps (11, 12).

5. Cellule de perméation (1, 1') selon la revendication 3 ou 4, dans laquelle lesdits premiers moyens de fixation magnétiques et lesdits seconds moyens de fixation magnétiques sont analogues les uns aux autres.

6. Cellule de perméation (1, 1') selon l'une quelconque des revendications 3 à 5, dans laquelle lesdits premiers moyens de fixation magnétiques et lesdits seconds moyens de fixation magnétiques sont des cylindres magnétiques.

7. Cellule de perméation (1, 1') selon l'une quelconque des revendications précédentes, dans laquelle la membrane (16) repose sur le disque de support (14).

8. Cellule de perméation (1, 1') selon l'une quelconque des revendications précédentes, comprenant un joint d'étanchéité (15) agencé autour du disque de support (14).

9. Cellule de perméation (1, 1') selon la revendication 8, dans laquelle ledit joint d'étanchéité (15) est agencé dans une rainure (22) du premier corps (10) ou du second corps (11, 12).

10. Cellule de perméation (1) selon l'une quelconque des revendications précédentes, comprenant deux disques de support (14) entre lesquels la membrane (16) est interposée.

11. Cellule de perméation (1) selon l'une quelconque des revendications précédentes, dans laquelle le premier corps (10) et le second corps (11) sont égaux l'un à l'autre.

12. Cellule de perméation (1) selon la revendication 10 ou 11, comprenant deux joints d'étanchéité (15), chaque joint d'étanchéité (15) étant agencé autour d'un disque de support respectif (14).

13. Cellule de perméation (1) selon la revendication 12, dans laquelle un premier joint d'étanchéité (15) est reçu dans une rainure (22) du premier corps (10) et un second joint d'étanchéité (15) est reçu dans une rainure (22) du second corps (11).

14. Cellule de perméation (1') selon l'une quelconque des revendications 1 à 9, comprenant seulement un disque de support (14), et dans laquelle le second corps (12), qui est destiné à être le corps supérieur, est différent par rapport au premier corps (10), qui est destiné à être le corps inférieur (10).

15. Cellule de perméation (1') selon la revendication 14, dans laquelle la cavité (112) du second corps (12) possède une forme d'entonnoir interne et est fermée au niveau du côté externe par un capuchon ou couvercle amovible (13) muni d'un trou (17).
